(19) Europäisches Patentamt
European Patent Office
Office européen des brevets

(11) Publication number: **0 406 952 A2**

# (12) EUROPEAN PATENT APPLICATION

(21) Application number: **90201726.8**

(51) Int. Cl.5: **C08G 69/44**, C08G 63/685

(22) Date of filing: **28.06.90**

(30) Priority: **01.07.89 NL 8901679**

(43) Date of publication of application:
**09.01.91 Bulletin 91/02**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Vriesema, Bindert Klaas**
**Burg. Luytenstraat 47**
**NL-6151 GE Sittard(NL)**

## (54) Aromatic polymer with diaminoanthraquinone units.

(57) The invention relates to a melt-processable anisotropic aromatic polymer that contains units derived from an aromatic diacid, aromatic hydroxy acid, aromatic diol and anthraquinone. The polymer is characterized in that it contains 0.1-25 mol.% units derived from 1,5-, 2,6-and/or 2,7-diaminoanthraquinone.

The polymer according to the invention has a high degree of thermal stability combined with a high modulus of elasticity and good ultimate strength. Surprisingly, the mechanical properties show reduced anisotropy while the properties in machine direction are retained.

EP 0 406 952 A2

## AROMATIC POLYMER WITH DIAMINOANTHRAQUINONE UNITS

The invention relates to a melt-processable anisotropic aromatic polymer that contains units derived from aromatic diacids, aromatic hydroxy acids, aromatic diols and anthraquinone.

Such polymers are known from US-A-4.429.100. This patent describes a liquid crystalline polymer that contains units derived from 6-hydroxy-2-naphthoic acid, parahydroxybenzoic acid, terephthalic and/or isophthalic acid and 2,6-dihydroxyanthraquinone. The polymer described is anisotropic and has a low melting temperature ( < 260 °C). The polymer is suitable for the manufacture of a fibre or a film.

However, the low melting temperature is a disadvantage when such polymers are used to produce moulding compounds that must have a high degree of thermal stability.

The aim of the invention is to provide a polymer with a high degree of thermal stability combined with optimum mechanical properties.

This aim is reached according to the invention because the polymer contains 0.1-25 mol.% units derived from 1,5-, 2,6- and/or 2,7-diaminoanthraquinone.

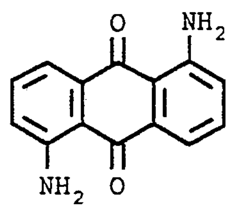

1,5-diaminoanthraquinone

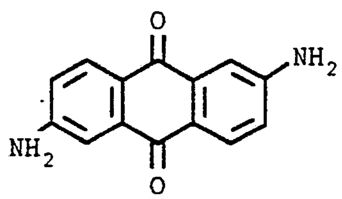

2,6-diaminoanthraquinone

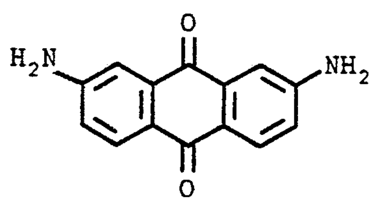

2,7-diaminoanthraquinone

It has been found that the polymer according to the invention does not only have improved thermal properties but that it also shows reduced anisotropy in its mechanical properties while the properties in machine direction are retained. Presumably a greatly improved chain-chain interaction is responsible for this. The use of dihydroxyanthraquinone as described in US-A-4.429.100 was not found to lead to a good chain-chain interaction. The polymer also appears to be extremely well processable.

Preferably, the polymer contains 0.1-25 mol.% units derived from 2,6-diaminoanthraquinone, more in particular 0.1-15 mol.%, and even more in particular 0.1-5 mol.%. The diaminoanthraquinones are commercially available. Such substances are usually obtained by reducing the corresponding dinitroanthraquinone. A preparation method is described in Lauer K., J. Prakt. Chem. 1932, 135, 7, 204.

In addition to diaminoanthraquinone, the polymer according to the invention contains:

(a) aromatic units with an oxy and a carboxyl group,

(b) aromatic units with two oxy groups, and

(c) aromatic units with two carboxyl groups.

The unit with an oxy and a carboxyl group is chosen dependent on the desired properties of the polymer. In general such a unit has a formula

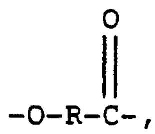

of which R contains at least one aromatic ring, for example:

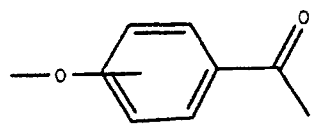 (I)

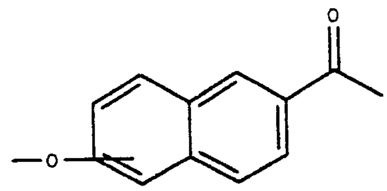 (Ia)

Preferably, the polymer according to the invention contains oxybenzoyl units with formula (I). These units are obtained from hydroxybenzoic acid or from derivatives hereof. The oxybenzoyl unit with formula (I) may be para- or meta-substituted. Mixtures of para- and meta-substituted oxybenzoyl units having formula (I) are also possible. Preferably, the unit with formula (I) is para-substituted. One or more of the hydrogen atoms in the aromatic ring may be substituted by an alkyl or an alkoxy group, with one to four carbon atoms, by a halogen such as chlorine, bromine or fluorine, and/or by a phenyl group which may be substituted if so desired. Preferably, the oxybenzoyl unit is derived from p-hydroxybenzoic acid.

Preferably, the polymer contains 20-70 mol.% oxybenzoyl units, relative to the total polymer.

Units with two oxy groups usually have a formula O-R-O, of which R contains at least one aromatic ring; examples are:

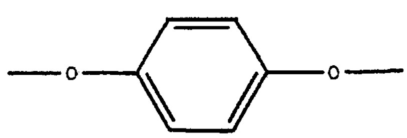 (IIa)

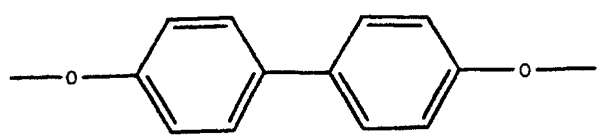 (IIb)

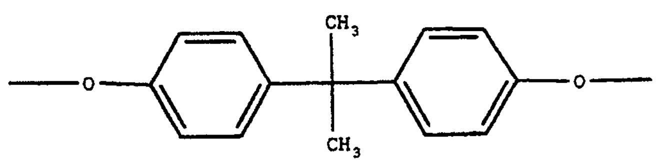 (IIc)

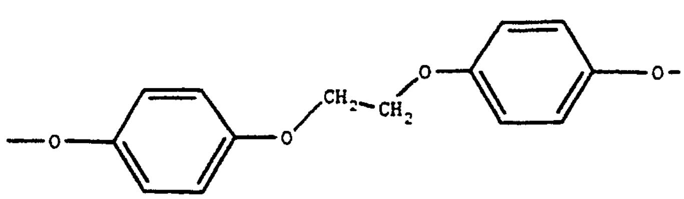 (IId)

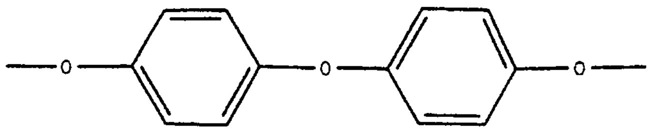

(IIe)

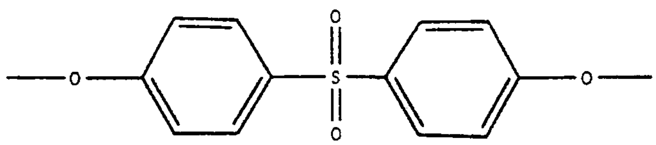

(IIf)

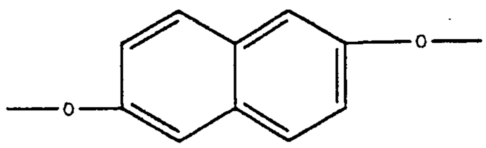

(IIg)

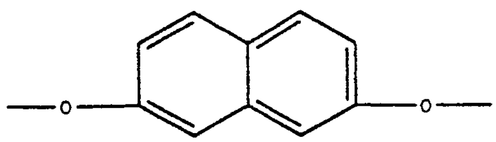

(IIh)

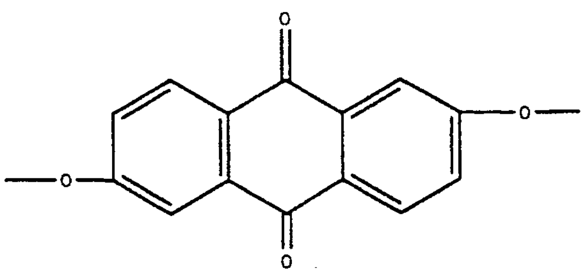

(IIi)

The polymer according to the invention may also contain mixtures of the aforementioned units. Preferably, the polymer according to the invention contains dioxybenzyl (IIa) and/or biphenoxy (IIb) groups, more in particular a biphenoxy group with formula (IIb). The latter compound can be obtained from p,p'-biphenol. One or more hydrogen atoms in the aromatic rings may be substituted by an alkyl group, an alkoxy group, a halogen or a phenyl group, which may itself be substituted too. Preferably, the polymer contains 5-40 mol.% units with two oxy groups.

The aromatic units with two carboxyl groups can be obtained from aromatic dicarboxylic acids or from the corresponding esters, such as terephthalic acid, isophthalic acid, 2,6-naphthalenedicarboxylic acid, 2,7-naphthalenedicarboxylic acid, and bibenzoic acid, 4,4'-dicarboxyldiphenylsulphone, 4,4'-dicarboxyldiphenylethane, 4,4'-dicarboxyldiphenyl sulphide, 4,4'-dicarboxylphenyl ether, 4,4'-dicarboxyldiphenylmethane, 4,4'-dicarboxyldiphenoxyethane, 2,2-bis(4-carboxylphenyl)propane. Preferably, the aromatic units with two carboxyl groups are obtained from terephthalic acid, isophthalic acid and/or the derivatives thereof. One or more hydrogen atoms in the aromatic ring may be substituted by an alkyl group, an alkoxy group, a halogen or a phenyl group, the last of which may itself be substituted too. Preferably, the units with two carboxyl groups are obtained from unsubstituted terephthalic acid and/or isophthalic acid. The polymer preferably contains 5-40 mol.% units with two carboxyl groups.

If so desired, the polymer may also contain up to 30 mol.% of a different amine-containing unit, which can be obtained from, for example, known substances such as p-aminobenzoic acid, p-aminophenol, p-N-methylaminophenol, p-phenylenediamine, N-methyl-p-phenylenediamine, N,N'-dimethyl-p-phenylenediamine, m-aminophenol, 4-amino-1-naphthol, 4-amino-4'-hydroxydiphenyl, 4-amino-4'hydroxyphenylether, 4-amino-4'-hydroxydiphenylmethane, 4-amino-4'-hydroxydiphenylethane, 4-amino-4'-hydroxydiphenyl sulphone, 4-amino-4'-hydroxydiphenyl sulphide, 4,4'-diaminophenyl sulphide, 4,4'-diaminodiphenyl sulphone, 2,5-diaminotoluene, 4,4′-ethylenediamine, 4,4′-diaminodiphenoxyethane, 4,4′-diaminodiphenylmethane, 4,4′-diaminodiphenylether.

In addition to the aforementioned units, the polymer may contain sulphone, urethane, carbonate, imide, keto, sulphide, azo, anhydride and/or thioester groups.

The polymer according to the invention is prepared in a manner known per se, for example via acetylation of the monomers with acetic anhydride followed by a polycondensation reaction; the monomers react at a temperature between 50° C and 350° C, preferably in an inert atmosphere, such as nitrogen or argon, at elevated temperature and lowered pressure, which results in a polycondensate with the desired degree of polymerization. It is possible, but not strictly necessary, to carry out the polycondensation reaction in the presence of a catalyst, such as lithium acetate, sodium acetate, potassium acetate, calcium acetate, magnesium acetate, cobalt acetate, zinc acetate, calcium benzoate, magnesium acetylacetonate, zinc acetylacetonate, zirconium butylate, zirconium propylate, titanium phenolate, sodium phenolate, germanium dioxide, antimony dioxide, dialkyl and diaryl tin oxide, dibutyl tin diacetate, and dibutyldimethoxy tin. Preferably, use is made of magnesium acetates and/or zinc acetates. The catalyst is added in amounts of up to 1 wt.%, relative to the total weight of the monomers used. After the reaction rate of the condensation or the esterification has decreased, the polymerization mixture is kept under a vacuum (approx. 0.1 mbar), if so desired, for one or more hours, at an elevated temperature. The product obtained is ground after cooling. Preferably, the ground product is subjected to postcondensation at a temperature of 200-400° C for 5-30 hours.

The polymers according to the invention are excellently suited to processing from the melt because the processing temperature of the polymers lies far below the decomposition temperature. Suitable processing methods are, for example, injection moulding and extrusion.

Objects entirely or partly manufactured from the polymers according to the invention have good properties with respect to tensile strength, in addition to good chemical resistance and thermal stability. Because of this, objects manufactured from the polymers according to the invention are used in the aircraft and automotive industries.

The polymers according to the invention are very suitable for the production of fibres and films, where tensile strength and thermal stability play an important part.

Dependent on the applications of the polymers, fillers, such as glass fibres, talc, kaolin, wollastonite and chalk, may also be added, preferably to at most 60 wt.%.

The invention will be further elucidated with the aid of the following examples, without being limited hereto.

## Example I

850 g of acetic anhydride was introduced into a reaction vessel equipped with a stirrer, a nitrogen feed tube and a reflux condenser.

The following were added to this:

3.2 moles of p-hydroxybenzoic acid
1.6 moles of terephthalic acid
1.52 moles of p,p′-biphenol
0.08 moles of 2,6-diaminoanthraquinone
1 g of zinc acetate.

The suspension was heated to 155° C and maintained at this temperature for 1-3 hours (by refluxing). Then the reflux condenser was converted into a distillation unit and acetic acid/acetic anhydride was distilled of. The temperature was increased to 315° C at a rate of 46° C/hour and this temperature was maintained until the desired degree of conversion had been obtained (90-95%) calculated on the amount of acetic acid.

After cooling to room temperature, the polymer obtained was ground, postcondensed (12 hours, 360° C) in the solid phase and characterized with the aid of Differential Scanning Calorimetry (DSC).

Melting temperature ($T_m$) = 410° C.

Characterization of 1.6-mm thick injection moulded plates:

| | MD | TD |
|---|---|---|
| modulus of elasticity ($N/mm^2$) (ASTM D-790) | 15000 | 5640 |

The modulus of elasticity was determined both in machine direction (MD) and in transverse direction (TD).

Example II

The same as example I but instead using:
3.2 moles of p-hydroxybenzoic acid
1,6 moles of terephthalic acid
1,44 moles of p,p′-biphenol
0.16 moles of 2,6-diaminoanthraquinone
1 g of zinc acetate.

After cooling to room temperature, the polymer obtained was ground, postcondensed (12 hours, 360 °C) in the solid phase and characterized with the aid of Differential Scanning Calorimetry (DSC). Melting temperature ($T_m$) = 395 °C. Characterization of 1.6-mm thick injection moulded plates:

| | MD | TD |
|---|---|---|
| modulus of elasticity ($N/mm^2$) | 18200 | 5700 |

Comparative experiment A

The same as example I but instead using:
3.2 moles of parahydroxybenzoic acid
1.6 moles of terephthalic acid
' 1.6 moles of biphenol
1 g of zinc acetate.

DSC yielded a melting temperature of 415 °C. Characterization of 1.6-mm thick injection moulded plates:

| | MD | TD |
|---|---|---|
| modulus of elasticity ($N/mm^2$) | 15900 | 3395 |

Although the polymer of comparative example A has a high melting temperature (and thermal stability) it is not suitable for the production of a fibre or a film.

Example III

The same as example I but instead using:
2 moles of p-hydroxybenzoic acid
0.9 moles of p,p′-biphenol
0.95 moles of terephthalic acid
0.05 moles of isophthalic acid
0.1 moles of 2,6-diaminoanthraquinone.

DSC yielded a melting temperature of 390 °C. Characterization of the 3.2-mm thick injection moulded plates:

| | MD | TD |
|---|---|---|
| modulus of elasticity ($N/mm^2$) | 10265 | 5535 |
| ultimate strength ($N/mm^2$) | 112.8 | 105.5 |

In the transverse direction determination the thick injection moulded plates were found to have a very high modulus of elasticity combined with an excellent ultimate strength.

The ultimate strength obtained in machine direction was virtually the same as that obtained in transverse direction, which points to reduced anisotropy.

The polymers of examples I-III are excellently suited to the production of fibres and film:

Comparative experiment B

0.2 moles of 6-acetoxy-2-naphthoic acid, 0.2 moles of 4-acetoxybenzoic acid, 0.05 moles of 2,6-dihydroxyanthraquinone, 0.05 moles of terephthalic acid were polymerised in the manner described in example III of US-A-4.429.100. The melting temperature of the polymer obtained was at most 266° C. The thermal stability was insufficient.

**Claims**

1. Melt-processable anisotropic polymer that contains units derived from an aromatic diacid, an aromatic hydroxy acid an aromatic diol and anthraquinone, characterized in that the polymer contains 0.1-25 mol.% units derived from 1.5-, 2.6- and/or 2,7-diaminoanthraquinone.
2. Polymer according to claim 1, characterized in that the polymer contains 0.1-25 mol.% units derived from 2, 6-diaminoanthraquinone.
3. Polymer according to either one of claims 1-2, characterized in that the polymer contains:
- 20-70 mol.% units derived from parahydroxybenzoic acid
- 5-50 mol.% units derived from biphenol and/or hydroquinone
- 5-50 mol.% units derived from terephthalic and/or isophthalic acid 1-15 mol.% units derived from 2,6-diaminoanthraquinone.
4. Moulding compound obtained from the polymer according to any one of claims 1-3.